# FASCICULE DE BREVET EUROPEEN

(11) **EP 0 397 164 B1**
(45) Date de publication et mention de la délivrance du brevet: **15.12.1993**
(21) Numéro de dépôt: 90108804.7
(22) Date de dépôt: 10.05.1990
(51) Int. Cl.: B41J 5/08, H04M 11/06, G06F 3/023

(54) **Dispositif de saisie d'un texte alphanumérique comprenant un afficheur et un clavier et application de ce dispositif à un terminal téléphonique**
Erfassungseinrichtung für einen alphanumerischen Text mit einer Anzeige und einer Tastatur und Anwendung dieser Vorrichtung in einem Telefonendgerät
Alphanumeric text entry device with display and keyboard, and application of said device to a telephone terminal

(30) Priorité: 11.05.1989 FR 8906201
(43) Date de publication de la demande: 14.11.1990
(73) Titulaire: ALCATEL BUSINESS SYSTEMS, F-75008 Paris (FR)
(72) Inventeur: Kleiber, Frédéric c/o Alcatel Business Syst., F-67400 Illkirch Cedex (FR); Drand, Dominique, F-67000 Strasbourg (FR); Hanser, Pierre, F-67200 Strasbourg (FR); Le Penven-Duval, Brigitte, F-67000 Strasbourg (FR); Kapps, Raymond, F-67170 Brumath (FR)
(74) Mandataire: Weinmiller, Jürgen

(56) Documents cités:
- DE-A- 3 307 354
- GB-A- 2 056 730
- GB-A- 2 131 746
- US-A- 4 333 097
- US-A- 4 737 980

## Description

La présente invention concerne un dispositif de saisie d'un texte alphanumérique et son application à un terminal téléphonique.

Pour saisir un texte, on emploie couramment des claviers tels que ceux des machines à écrire ou ceux des consoles d'ordinateur. Généralement ces claviers comportent autant de touches que de symboles avec, parfois, des touches fonctions qui permettent, par exemple d'imprimer les majuscules. Les caractères alphanumériques, tels que les lettres, les chiffres, l'espace, les signes de ponctuation, certains symboles, sont assez nombreux.

Pour des raisons de coût et/ou d'encombrement, il est intéressant de réduire le nombre de touches d'un clavier autorisant la saisie d'un texte alphanumérique.

De tels dispositifs utilisant un nombre de touches réduits existent actuellement. Ils comprennent un clavier composé de deux ensembles de touches. Dans le premier ensemble, chaque touche correspond à plusieurs caractères alphanumériques ; ces touches, que l'on est convenu d'appeler touches numériques, sont souvent repérées par un chiffre de zéro à neuf ou un signe tel qu'un dièse, un astérisque, un point etc... Dans le second ensemble, des touches de sélection permettent de choisir un seul des caractères correspondant à l'une des touches numériques.

Ainsi, le dispositif décrit dans le brevet américain US-4 737 980 prévoit la possibilité de visualiser un ensemble de caractères générés par une touche numérique, l'un de ces caractères étant alors saisi suite à l'actionnement d'une touche de sélection.

Cependant dans certaines applications, de type grand public par exemple, l'utilisation des touches de sélection doit être d'une grande simplicité.

La présente invention a pour objet un dispositif de ce type permettant la saisie d'un texte sans aucune ambiguïté quant à l'utilisation des touches de sélection. Elle trouvera application, notamment, dans les terminaux téléphoniques.

Le dispositif de saisie d'un texte alphanumérique selon l'invention comprend un afficheur et un clavier équipé de touches numériques et de touches de sélection. Certaines desdites touches numériques au moins correspondent à plusieurs caractères alphanumériques, lesdites touches de sélection permettant de choisir un des caractères alphanumériques d'une touche numérique. La saisie de certains au moins desdits caractères alphanumériques s'obtenant en actionnant une touche numérique, puis une touche de sélection. Ledit afficheur se compose de deux parties, une première partie visualisant le texte déjà saisi et une deuxième partie qui, après actionnement d'une touche numérique correspondant à plusieurs caractères, fait au moins apparaître l'un de ces caractères à proximité immédiate de l'une desdites touches de sélection. La saisie de ce caractère est ensuite obtenue par l'actionnement de la touche de sélection dont il est proche.

Avantageusement, le dispositif de saisie d'un texte alphanumérique qui comprend un afficheur et un clavier équipé de touches numériques correspondant chacune à quatre caractères alphanumériques au plus et de trois touches sélection affecte à la position courante du texte un caractère central et visualise à proximité immédiate de l'une au moins des trois touches de sélection un des trois autres caractères alphanumériques. L'actionnement d'une touche de sélection remplace le caractère de ladite position courante par le caractère affiché à proximité immédiate de cette touche de sélection.

Dans un mode de réalisation de l'invention, le dispositif de saisie d'un texte alphanumérique comprend un afficheur et un clavier équipé de touches numériques correspondant chacune à trois caractères alphanumériques au plus et trois touches de sélection. Il laisse la position courante du texte vide et visualise à proximité immédiate de l'une au moins desdites touches de sélection un desdits trois caractères alphanumériques. L'actionnement d'une desdites touches de sélection inscrit à la position courante le caractère affiché à proximité immédiate de ladite touche de sélection.

Dans un autre mode de réalisation de l'invention, le dispositif de saisie d'un texte alphanumérique comprend un afficheur et un clavier équipé de touches numériques correspondant chacune à trois caractères alphanumériques au plus et de deux touches de sélection. Il affecte à la position courante du texte un caractère central et visualise à proximité immédiate de l'une au moins desdites touches de sélection un des deux autres caractères alphanumériques. L'actionnement d'une desdites touches de sélection remplaçe le caractère de ladite position courante par le caractère affiché à proximité immédiate de ladite touche de sélection.

En outre, le dispositif de saisie selon l'invention d'un texte alphanumérique comprenant un afficheur et un clavier trouvera application dans un terminal téléphonique pour assurer la fonction de numérotation et la transmission de messages.

Les différents objets et caractéristiques de l'invention seront maintenant exposés de façon plus détaillée dans le cadre de la description d'exemples de réalisation, donnés à titre non limitatif, en se référant aux figures annexées qui représentent :
- La figure 1, un dispositif selon l'invention dont les touches numériques correspondent à quatre caractères alphanumériques au plus et qui comporte trois touches de sélection,
- La figure 2, un autre dispositif selon l'invention dont les touches numériques correspondent à trois caractère alphanumériques et qui comporte trois touches de sélections,
- la figure 3, un troisième dispositif selon l'invention dont les touches numériques correspondent à trois caractères alphanumériques et qui comporte deux touches de sélections.

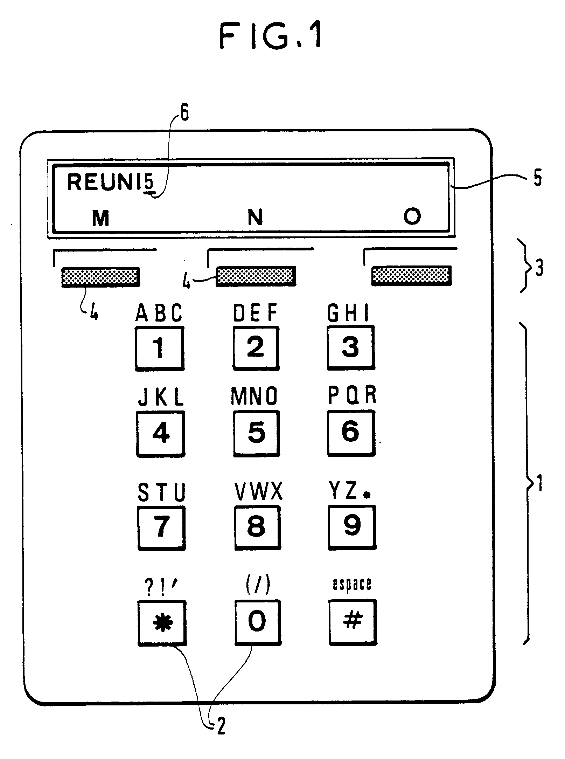

Un premier mode de réalisation de l'invention est représenté à la figure 1. On y voit un clavier comportant deux ensembles de touches. Le premier ensemble 1 est composé de touches numériques 2. Le deuxième ensemble 3 est composé de touches de sélection 4.

L'afficheur 5 est composé de deux parties, une partie supérieure où est visualisé le message en cours de composition, une partie inférieure à proximité immédiate des touches de sélection, permettant d'affecter un caractère à chacune de ces touches. De ce fait, l'action de sélection et le contrôle du texte saisi s'effectue avec un déplacement visuel minimal.
La position courante, indiquée par le curseur 6, est celle du caractère que l'on doit saisir. Les touches numériques permettent, lors de la saisie, de sélectionner un groupe de quatre caractères alphanumériques : un caractère central inscrit sur la touche et trois caractères additionnels au plus, inscrits au-dessus de la touche. L'actionnement d'une touche numérique, la touche 5 dans l'exemple décrit, provoque simultanément l'apparition du caractère central ("5") de la touche numérique dans la position courante et l'affectation d'un caractère à chacune des touches de sélection. Si le caractère à saisir est bien celui figurant dans la position courante il n'y a pas d'autre manoeuvre à effectuer. Si par contre le caractère à saisir est celui figurant en regard d'une des touches de sélection, le caractère N par exemple, il suffit d'appuyer sur cette touche de sélection (la touche centrale) pour que ce caractère soit saisi à la place du précédent (le "5") et le caractère vient alors s'insérer dans la position courante.

La saisie du caractère suivant s'effectue selon une procédure identique. La réalisation pratique d'un tel dispositif ne pose pas de difficulté. L'emploi d'un microprocesseur ou de circuits logiques associés à une mémoire est maintenant courant et une telle application se réalise aisément.

L'objectif de l'invention, à savoir la saisie d'un caractère sans ambiguïté, est bien atteint.

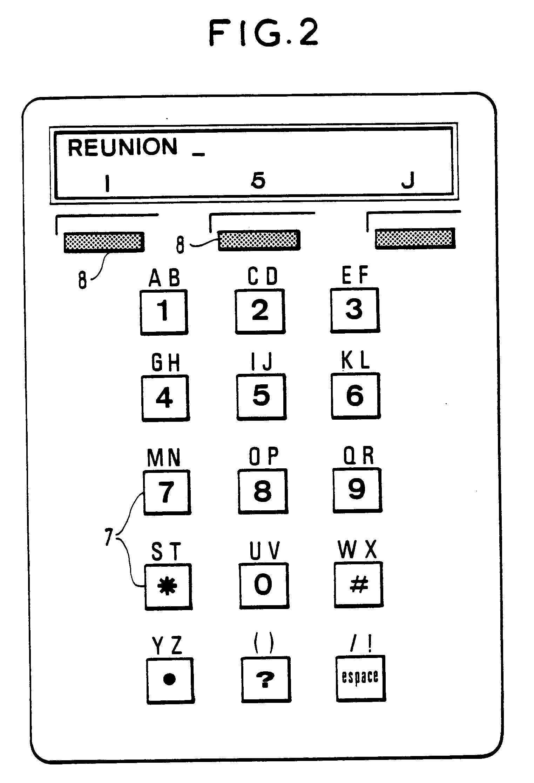

Dans une première variante de l'invention représentée dans la figure 2, les mêmes considérations s'appliquent, si ce n'est que :
- chaque touche numérique 7 correspond à un groupe de trois caractères alphanumériques,
- la position courante n'est pas affectée d'un caractère lors de l'actionnement d'une touche numérique.

Dans ce cas, l'actionnement d'une touche numérique provoque la visualisation en regard de chacune des trois touches de sélection 8 d'un des caractères associés à cette touche numérique. Pour terminer la saisie du caractère, il suffit d'actionner la touche de sélection correspondante.

Dans cette variante, la procédure de saisie est plus systématique puisque, quel que soit le caractère à saisir, il faut actionner successivement une touche numérique et une touche de sélection.

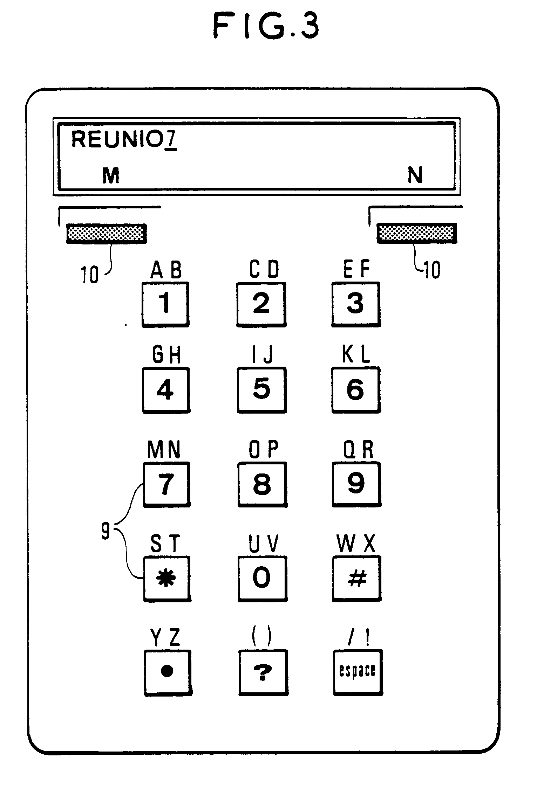

Dans une seconde variante de l'invention représentée dans la figure 3, le dispositif est analogue à celui de la figure 1. Il est cependant simplifié puisque chaque touche numérique 9 correspond à un groupe de trois caractères alphanumériques et qu'il comprend seulement deux touches de sélection 10. Le fonctionnement est analogue à savoir que l'actionnement d'une touche numérique fait apparaître dans la position courante le caractère central et visualise en regard des touches de sélection, les deux caractères additionnels. La suite de la procédure est inchangée.

Une application de l'invention, notamment sous l'une quelconque ds formes précédemment décrites, consiste à utiliser un tel dispositif dans un terminal téléphonique. Dans ce cas, le clavier peut être utilisé soit pour effectuer la numérotation d'un correspondant, soit pour saisir un message destiné à un correspondant.

## Revendications

1. Dispositif de saisie d'un texte alphanumérique comprenant un afficheur (5) et un clavier équipé de touches numériques (2, 7, 9) et de touches de sélection, (4, 8, 10) certaines desdites touches numériques au moins correspondant à plusieurs caractères alphanumériques dont un caractère central, lesdites touches de sélection permettant de choisir un des caractères alphanumériques d'une touche numérique, la saisie de certains au moins desdits caractères alphanumériques s'obtenant en actionnant une touche numérique, puis une touche de sélection, ledit afficheur étant composé d'une première partie visualisant le texte déjà saisi et d'une deuxième partie visualisant certains au moins desdits caractères alphanumériques associés à une dite touche numérique, caractérisé en ce que lesdites touches de sélection étant disposées en regard de ladite deuxième partie de l'afficheur (5), l'actionnement d'une touche numérique correspondant à plusieurs caractères fait apparaître au moins l'un de ces caractères à proximité de l'une desdites touches de sélection, ledit caractère apparaissant à la position courante du texte suite à l'actionnement de la touche de sélection dont il est proche.

2. Dispositif de saisie d'un texte alphanumérique comprenant un afficheur (5) et un clavier selon la revendication 1, caractérisé en ce que, suite à l'actionnement d'une dite touche numérique, il affecte à la position courante du texte ledit caractère central de cette touche et en ce qu'il visualise à proximité immédiate de l'une au moins desdites touches de sélection un caractère additionnel, l'actionnement d'une touche de sélection remplaçant le caractère de ladite position courante par le caractère affiché à proximité immédiate de cette touche de sélection.

3. Dispositif de saisie d'un texte alphanumérique comprenant un afficheur et un clavier selon la revendication 1, caractérisé en ce que chacun des chiffres de 0 à 9 correspond à un dit caractère central.

4. Dispositif de saisie d'un texte alphanumérique comprenant un afficheur et un clavier selon la revendication 1 ou 3, caractérisé en ce que, chacune desdites touches numériques (7) correspondant à trois caractères alphanumériques au plus, il comprend trois touches de sélection (8).

5. Dispositif de saisie d'un texte alphanumérique comprenant un afficheur et un clavier selon la revendication 2, caractérisé en ce que chacun des chiffres de 0 à 9 correspond à un dit caractère central.

6. Dispositif de saisie d'un texte alphanumérique comprenant un afficheur (5) et un clavier selon la revendication 2 ou 5, caractérisé en ce que, chacune desdites touches numériques (2) correspondant à quatre caractères alphanumériques au plus, il comprend trois touches de sélection (4).

7. Dispositif de saisie d'un texte alphanumérique comprenant un afficheur et un clavier selon la revendication 2 ou 5, caractérisé en ce que, chacune desdites touches numériques (9) correspondant à trois caractères alphanumériques au plus, il comprend deux touches de sélection (10).

8. Application du dispositif de saisie d'un texte alphanumérique comprenant un afficheur (5) et un clavier selon l'une quelconque des revendications précédentes, caractérisée en ce que, dans un terminal téléphonique le clavier assure la fonction de numérotation et la transmission de messages.

## Claims

1. Input apparatus for inputting alphanumeric text, the apparatus comprising a display (5) and a keypad fitted with numeric keys (2, 7, 9) and selection keys (4, 8, 10), at least some of said numeric keys corresponding to a respective plurality of alphanumeric characters including a central character, said selection keys serving to select one of the alphanumeric characters of a numeric key, at least some of said alphanumeric characters being input by actuating a numeric key and then a selection key, said display comprising a first portion displaying text that has already been input and a second portion displaying at least one of said alphanumeric characters associated with one of said numeric keys, the apparatus being characterized in that said selection keys are disposed in association with said second portion of the display (5), actuating a numeric key corresponding to a plurality of characters causes at least one of said characters to appear in the proximity of a respective one of said selection keys, with said character appearing at the current position in the text on actuation of the selection key to which it is close.

2. Apparatus according to claim 1 for inputting alphanumeric text and comprising a display (5) and a keypad, the apparatus being characterized in that on actuation of one of said numeric keys, it assigns said central character of said key to the current position in the text and it displays an additional character in the immediate proximity of at least one of said selection keys, actuating a selection key causing the character at said current position to be replaced by the character displayed in the immediate proximity of said selection key.

3. Apparatus according to claim 1 for inputting alphanumeric text and comprising a display and a keyboard, the apparatus being characterized in that each of the digits 0 to 9 corresponds to one of said central characters.

4. Apparatus according to claim 1 or 3, for inputting alphanumeric text and including a display and a keyboard, the apparatus being characterized in that each of said numeric keys (7) corresponds to no more than three alphanumeric characters, said apparatus including three selection keys (8).

5. Apparatus according to claim 2 for inputting alphanumeric texts and including a display and a keypad, the apparatus being characterized in that in each of the digits 0 to 9 corresponds to one of said central characters.

6. Apparatus according to claim 2 or 5 for inputting alphanumeric text and comprising a display (5) and a keypad, the apparatus being characterized in that each of said numeric keys (2) corresponds to no more than four alphanumeric characters, the apparatus including three selection keys (5).

7. Apparatus according to claim 2 or 5 for inputting alphanumeric text and including a display and a keypad, the apparatus being characterized in that each of the numeric keys (9) corresponds to no more than three alphanumeric characters, the apparatus including two selection keys (10).

8. An application of apparatus according to any preceding claim for inputting alphanumeric text and comprising a display (5) and a keypad, the application being characterized in that in a telephone terminal the keypad performs both the dialing function and a message transmitting function.

## Patentansprüche

1. Einrichtung zur Erfassung eines alphanumerischen Textes, die eine Anzeigevorrichtung (5) und eine Tastatur enthält, welche mit Zifferntasten (2, 7, 9) und Wähltasten (4, 8, 10) ausgestattet ist, wobei mindestens bestimmte Zifferntasten zu mehreren alphanumerischen Zeichen, darunter einem mittleren Zeichen, gehören und wobei die Wähltasten die Auswahl eines der alphanumerischen Zeichen einer Zifferntaste ermöglichen, wobei die Erfassung mindestens bestimmter alphanumerischer Zeichen durch Betätigen einer Zifferntaste und dann einer Wähltaste erreicht wird und wobei die Anzeigevorrichtung aus einem ersten Teil, der den bereits erfaßten Text sichtbar macht, und einem zweiten Teil besteht, der mindestens bestimmte, der jeweiligen Zifferntaste zugewiesene alphanumerische Zeichen sichtbar macht, dadurch gekennzeichnet, daß die Wähltasten gegenüber dem zweiten Teil der Anzeigevorrichtung (5) angeordnet sind, daß die Betätigung einer mehreren Zeichen entsprechenden Zifferntaste mindestens eines dieser Zeichen in der Nähe einer der Wähltasten sichtbar macht, wobei das Zeichen nach der Betätigung der Wähltaste, in deren Nähe es sich befindet, in der laufenden Position erscheint.

2. Einrichtung zur Erfassung eines alphanumerischen Textes, mit einer Anzeigevorrichtung (5) und einer Tastatur gemäß Anspruch 1, dadurch gekennzeichnet, daß sie nach der Betätigung einer Zifferntaste der laufenden Position des Textes das mittlere Zeichen zuweist und daß sie in unmittelbarer Nähe mindestens einer der Wähltasten ein zusätzliches Zeichen sichtbar macht, wobei die Betätigung einer Wähltaste das Zeichen der laufenden Position durch das in unmittelbarer Nähe dieser Wähltaste angezeigte Zeichen ersetzt.

3. Einrichtung zur Erfassung eines alphanumerischen Textes, mit einer Anzeigevorrichtung und einer Tastatur gemäß Anspruch 1, dadurch gekennzeichnet, daß jede der Ziffern von 0 bis 9 einem zentralen Zeichen entspricht.

4. Einrichtung zur Erfassung eines alphanumerischen Textes, mit einer Anzeigevorrichtung und einer Tastatur gemäß Anspruch 1 oder 3, dadurch gekennzeichnet, daß jede der Zifferntasten (7) maximal drei alphanumerischen Zeichen entspricht, und daß sie drei Wähltasten (8) enthält.

5. Einrichtung zur Erfassung eines alphanumerischen Textes, mit einer Anzeigevorrichtung und einer Tastatur gemäß Anspruch 2, dadurch gekennzeichnet, daß jede der Ziffern von 0 bis 9 einem zentralen Zeichen entspricht.

6. Einrichtung zur Erfassung eines alphanumerischen Textes, mit einer Anzeigevorrichtung (5) und einer Tastatur gemäß Anspruch 2 oder 5, dadurch gekennzeichnet, daß die Zifferntasten (2) maximal vier alphanumerischen Zeichen entsprechen und daß die Einrichtung drei Wähltasten (4) aufweist.

7. Einrichtung zur Erfassung eines alphanumerischen Textes, mit einer Anzeigevorrichtung und einer Tastatur gemäß Anspruch 2 oder 5, dadurch gekennzeichnet, daß jeder der Zifferntasten (9) maximal drei alphanumerischen Zeichen entsprechen, und daß die Einrichtung zwei Wähltasten (10) aufweist.

8. Anwendung der Einrichtung zur Erfassung eines alphanumerischen Textes, mit einer Anzeigevorrichtung (5) und einer Tastatur gemäß einem beliebigen der vorhergehenden Ansprüche, dadurch gekennzeichnet, daß die Tastatur bei einem Fernsprechapparat die Funktion des Wählens und der Informationsübertragung erfüllt.
